(19) **Europäisches Patentamt**

**European Patent Office**

**Office européen des brevets**

(11) **EP 1 284 528 A2**

(12) **EUROPEAN PATENT APPLICATION**

(43) Date of publication:
**19.02.2003 Bulletin 2003/08**

(51) Int Cl.⁷: **H01S 3/30**, H01S 3/13,
H04B 10/145

(21) Application number: **02255100.6**

(22) Date of filing: **22.07.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **25.07.2001 US 307768
13.12.2001 US 22103**

(71) Applicant: **Nortel Networks
St Laurent, Québec H4S 2A9 (CA)**

(72) Inventors:
• **Flannery, Damian
Torquay, Devon TQ2 7TF (GB)**
• **Flintham, Barrie
Totnes TQ9 7LH (GB)**

(74) Representative: **Bewley, Ewan Stuart
Nortel Networks
Intellectual Property Law Group
London Road
Harlow, Essex CM17 9NA (GB)**

(54) **Distributed raman amplifier module auto-setup**

(57) The invention is directed to a method for automatic set up of Raman gain within an optical transmission fibre adapted to carry a number of optical transmission channels and having at least one optical pump operable to cause the fibre to exhibit Raman amplification. The method involves modulating the power of the optical pump or pumps, detecting the effect of the modulation on the gain of each transmission channel and then adjusting the power of the pump or pumps in dependence on the effect detected. The invention is also directed to apparatus for performing this method.

Figure 8

EP 1 284 528 A2

**Description**

This invention is concerned generally with optical fibres exhibiting Raman amplification. More particularly, the invention provides a technique and apparatus for the automatic setup of a distributed Raman amplifier.

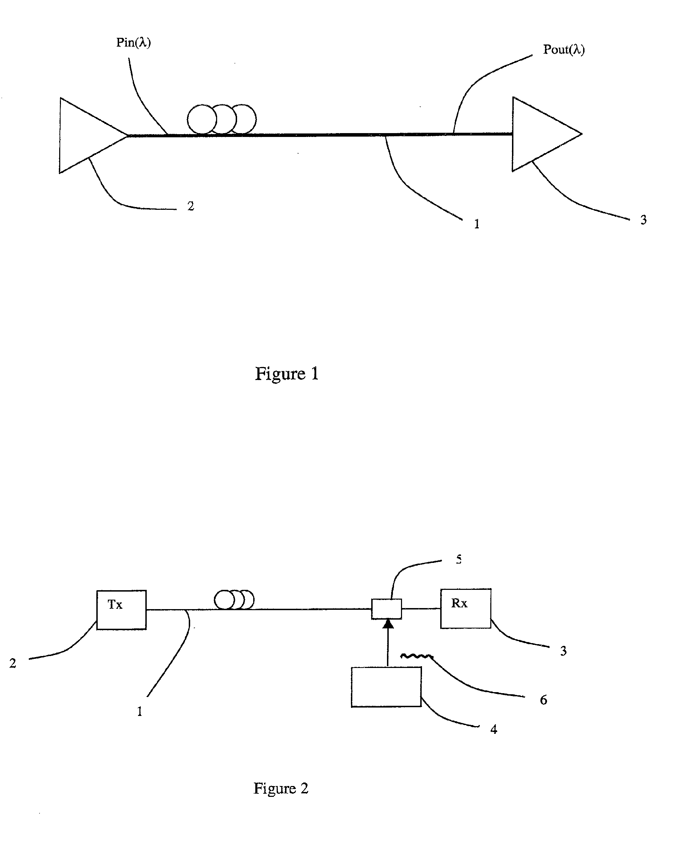

In the field of optical communication, it is common nowadays for optical fibres to form the medium for transmission of signals between a transmit end and a receive end of the fibre. Figure 1 shows in schematic form, a typical communication link including an optical fibre 1 located between such a transmit end 2 and a receive end 3.

The fibre may be arranged to operate as a Raman amplifier. This is achieved by "pumping" the fibre with optical energy, usually from one or more optical sources such as lasers.

In order to explain this effect, it is necessary to imagine the molecules of a material being mounted on springs. They can then be regarded as having a natural vibration frequency $\omega_v$. When the molecules are excited by an applied source of excitation energy, known as pumping energy, the molecules will vibrate. The nearer the pumping frequency $\omega_p$ to $\omega_v$, the greater the vibration amplitude of the molecules as they near resonance with the pumping frequency. Either side of the resonant frequency, modulation of the refractive index of the material by the applied pumping energy leads to two other frequencies of interest, called the Stokes and Anti-Stokes frequencies. These are the difference and the sum respectively of the resonant and the pumping frequencies, namely $\omega_s = \omega_p - \omega_v$ and $\omega_s = \omega_p + \omega_v$.

Considering only the Stokes vibration $\omega_s$, the combined effect of this and the pumping frequency $\omega_p$ can lead to stimulation of other molecules in the material so as to cause them likewise to vibrate. In this way, the applied pumping frequency has the effect of promoting more molecules to vibrate, thereby enhancing the original effect of the pumping frequency. When this effect occurs, there is said to be stimulated Raman amplification. The overall outcome is that the whole (or at least a significant part) of the fibre becomes an amplifier. The fibre is then considered to be a distributed gain amplifier.

Despite this, the characteristics of the fibre still lead to an overall loss in power of signals transmitted over the path. This is illustrated in Figure 1, wherein the input power Pin($\lambda$) is greater than the output power Pout($\lambda$). In other words, the fibre exhibits an overall loss.

This loss has long been recognised by those skilled in the art and various measures have been utilised to overcome this loss. Repeater amplifiers can be located at intervals along the length of the fibre but this imposes a need for further power to supply the repeaters and introduces the need for couplers and electro-optical converters, thereby diminishing the advantages of using repeater amplifiers.

It is also known to provide pumping energy from a plurality of sources. Up to four or so lasers may be used to provide this energy. Because of the Raman effect and the Stokes frequencies, the frequencies at which gain is obtained by this technique are shifted upwards in frequency by around 13 THz. The gain vs wavelength profile from each of the pumping sources can be selected to overlap at the upshifted frequencies in such a way that the combined gain profile is substantially flat. In reality, the gain profile is more likely to be "rippled" but is more usable than the gain profiles provided by the laser sources individually.

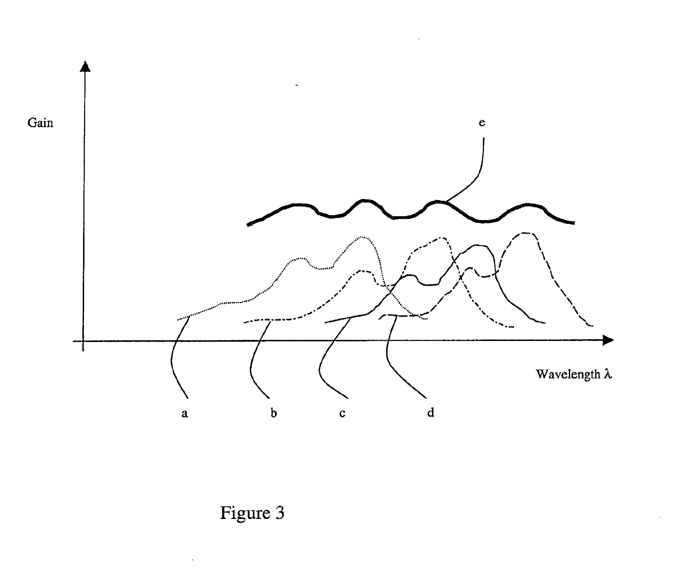

An example of the individual gain profiles and their combined effect is illustrated in Figure 3 for four laser pumping sources, whose gain profiles correspond to the curves marked a-d in Figure 3. Their combined effect is shown at e in Fig 3.

In order to establish the required overall gain profile, it is necessary to set up the pump powers of the individual pumping sources (lasers) correspondingly. However, as the skilled man will appreciate, that operation is not as straightforward as it sounds. There are interactions between the Raman pumping powers and between the signals themselves that are not easy to predict accurately and which may vary with operating conditions and time.

For example, some of the parameters that affect the desired ratio of pump powers are the type of fibre employed in the system (and hence its characteristics); the loss of the fibre span (L($\lambda$)), which is itself dependent on span length and system passives; the channel input power Pin($\lambda$); and the channel loading.

Whilst it is theoretically possible for these parameters to be made available to the engineer so that the appropriate compensation can be produced, in reality the shape of the required compensation profile is unknown to its provider because the parameter information required to "shape" the compensation is not available. This situation is a recent development in that providers of compensation now form part of an external market that is competing to provide compensation tailored to pre-existing optical communication systems.

One system is known in which amplitude modulation of a laser pump signal is carried out as a means of closed loop gain control of a Raman pumped optical transmission fibre. The received modulation depth at a particular wavelength is compared with the transmitted modulation depth to derive a measure of the gain provided by the distributed Raman amplifier formed by the fibre of the transmission link. The difference signal is then used to control the power level of the laser pump source. However, the control loop algorithm requires knowledge of such factors as fibre attenuation at the signal frequency of interest, the fibre length, the transit time of the fibre, and the effective length of the fibre.

There is therefore a great need for a generic technique that can compensate any optical communication link without prior knowledge of the inherent and/or operating parameters of that link. The present invention provides such generic compensation.

It is an object of the invention to overcome disadvantages associated with known methods and devices. The above object is met by the combination(s) of features of the main claim(s), the sub-claims disclose further advantageous embodiments of the invention.

By modulating the Raman pump power and utilising the effect on the gain of signals in the optical fibre providing the transmission medium, information on the profile of the Raman gain can be obtained. Modulation of the Raman pump is effectively transferred to modulation of the Raman gain in the fibre.

The invention provides a method for automatically setting up the Raman gain within an optical transmission fibre, having at least one pump, comprising (a) modulating the power of the at least one pump; (b) detecting the effect of the modulation on signals transmitted over the fibre; and (c) adjusting the power of the pump in dependence on the effect detected in step (b).

Preferably the modulating step (a) is carried out by applying a dither signal to said optical pump(s).

The method may further comprise the steps of:

(d) storing data relating to the power of said transmission channels under full load conditions prior to said modulating step (a);
(e) storing data relating to the power of said transmission channels during said detecting step (b);
(f) comparing stored data derived from step (d) with stored data derived from step (e) to obtain a difference signal; and
(g) adjusting the power of said optical pumps in dependence on said difference signal.

Each optical pump may comprise a plurality of optical pump sources and said method may be applied to each of said sources in turn.

The difference signal may comprise the data [Original shape($\lambda$)] obtained under full load conditions in step (d) reduced by a factor relating to the contribution made by each said source in turn, according to the algorithm:

$$\text{Fibre gain}(\lambda) = [\text{Original shape}(\lambda)]-[(\Delta Pp_{xnm}/N)*(Pc_{xnm}(\lambda)]_R$$

where:

Fibre gain($\lambda$)is the predicted value for the gain of the fibre as a function of wavelength $\lambda$;
$\Delta Pp_{xnm}$ is the difference in pump power at a wavelength of Xnm between the power required for the original gain shape and the new pump power;
$Pc_{xnm}$ is the contribution from the pump source of wavelength Xnm as measured by reducing the pump power by NmW from the original power, and
R represents the number of individual pump sources whose contributions are deducted from [Original shape($\lambda$)].

Preferably the steps (a) to (g) are performed iteratively over all transmission channels.

The invention is also directed to a method for determining the gain profile of a Raman optical transmission fibre having a plurality of optical pumps and adapted to carry a plurality of optical transmission channels, the method comprising:

(a) storing data relating to the power of each of said transmission channels in turn under full load conditions;
(b) modulating the power of said optical pumps in turn;
(c) detecting the effect of said modulation on the gain of each of said transmission channels;
(d) storing data relating to the gain of said transmission channel(s)during said detecting step (c);
(e) comparing stored data derived from step (a) with stored data derived from step (e) to obtain a difference signal; and
(f) adjusting the power of said optical pumps in dependence on said difference signal.

The invention also provides apparatus for automatically setting up the Raman gain of an optical transmission fibre, comprising at least one pump for applying optical power to the Raman fibre, a modulator to modulate the pump power, detector means for detecting the depth of modulation of a signal subjected to the modulated pump, comparator means to determine the variation in modulation depth of the signal, and control means for adjusting the power of the pump in dependence on the output of the comparator means.

Preferably the apparatus further comprises:

(f) a plurality of said pumps;

(g) means for modulating in turn each said channel when pumped by a respective said pump;

(h) means for storing data derived from said detector and relating to the gain profile of each said channel; and wherein said control means adjusts the power of each said pump according to the following algorithm:

$$\text{Fibre gain}(\lambda) = [\text{Original shape}(\lambda)] - [(\Delta Pp_{xnm}/N) * (Pc_{xnm}(\lambda)]_R$$

where:

Fibre gain$(\lambda)$ is a predicted value for the gain of the fibre as a function of wavelength $\lambda$;

$\Delta Pp_{xnm}$ is the difference in pump power at a wavelength of Xnm between the power required for the original gain shape and the new pump power;

$Pc_{xnm}$ is the contribution from the pump source of wavelength Xnm as measured by reducing the pump power by NmW from the original power, and

R represents the number of individual pump sources whose contributions are deducted from [Original shape$(\lambda)$].

The apparatus may also comprise a computer programmed to perform the said algorithm.

The apparatus may further comprise storage means carrying a program to perform said algorithm.

The invention is also directed to a computer program on a machine readable format to carry out the methods described above.

The invention also provides a carrier containing software permitting a general purpose computer to carry out the methods described above.

The invention further provides a general purpose computer programmed to carry out the method(s).

The invention is further directed to an optical signal amplified by an optical transmission fibre exhibiting Raman gain and forming part of the apparatus as described above.

The invention is directed to an optical signal amplified by an optical pump operable on an optical transmission fibre to cause Raman gain by the methods described above.

The invention is directed to an optical system comprising an apparatus for automatically controlling the gain of each of a plurality of optical transmission channels in an optical transmission fibre operable so as to exhibit Raman amplification, the apparatus comprising;

(a) at least one pump for applying optical power to the fibre to cause it to operate as a Raman amplifier;

(b) a modulator to modulate said optical power;

(c) a detector for detecting the depth of modulation of a signal transmitted over the channel subjected to the modulated pump;

(d) a comparator to determine the variation in modulation depth of the signal subjected to said modulation compared to the signal prior to modulation; and

(e) control means for adjusting the power of the pump in dependence on the output of the comparator, whereby to obtain an indication of the gain profile of each of said transmission channels.

The invention yet further provides a gain monitoring system and a pump power controller for carrying out the method.

The summary of the invention does not necessarily disclose all the features essential for defining the invention; the invention may reside in a sub-combination of the disclosed features.

The invention will be described with reference to the following drawings, in which:

Figure 1 is a schematic diagram of a typical Raman fibre distributed amplifier;

Figure 2 illustrates a first embodiment of the invention;

Figure 3 illustrates a typical gain profile for four laser pumps;

Figure 4 is a flow chart illustrating one embodiment of the auto-setup procedure;

Figure 5 is a first set of graphs illustrating the invention;

Figure 6 is a second set of graphs illustrating the invention;

Figure 7 is a third set of graphs illustrating the invention; and

Figure 8 is a block diagram of the components needed to implement the invention.

**Detailed Description**

The following description is of preferred embodiments by way of example only and without limitation to the combination of features necessary for carrying the invention into effect.

Figure 1 shows a span of a typical optical communication link including an erbium-doped optical fibre 1 connected between a transmit end 2 and a receive end 3. The ends 2, 3 are represented by amplifiers consisting of the optical fibre itself operating in distributed amplifier mode as a result of pumping by one or more pump sources, such as lasers, causing the fibre to exhibit the Raman effect. The whole fibre then behaves as a distributed Raman amplifier, imparting gain to signals transmitted in various channels within the fibre. This is known to the skilled man.

Referring to Figure 3, in the case where there are a plurality of laser pumps, each contributes a gain profile to the optical fibre at a wavelength dependent on the wavelength of the pump source. Four such pumps are shown at a-d in Figure 3. The cumulative effect of these individual profiles is to create an overall gain profile indicated as e in Figure 3. The wavelengths of the pumps are selected to provide a cumulative profile that covers the transmission band of the signals in question.

In order to set up the span to give best performance for the signals in question, the relative power levels of each of the profiles a-d has to be adjusted so that the desired overall profile e can be attained. Previous attempts at doing this have all required knowledge of the parameters of the transmission link and the signal loading. However, in the present invention, this is no longer necessary, as will now be described.

Referring to Figure 2, there is shown a basic, schematic diagram of the principle under which the invention operates. Near the receive end 3 of the transmission span, the pump source 4 is coupled into the receive end of the fibre 1 by an optical coupler 5. This may be conventional in form. In accordance with the invention, means are provided to impose modulation to the pump power. This is indicated schematically at 6 in Figure 2. The effect of this on the pump powers and the signals transmitted over the span will be explained after the following detailed description of a preferred implementation of the invention.

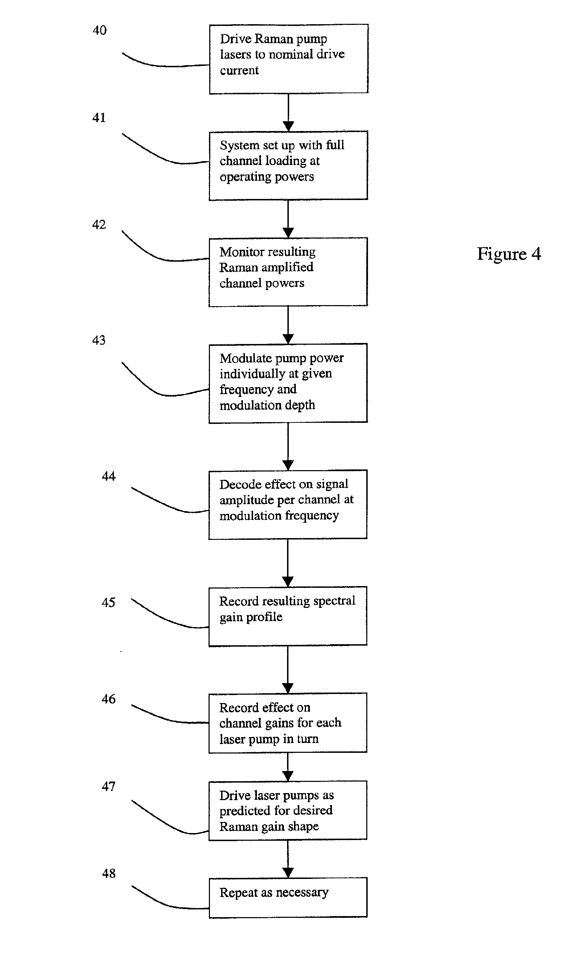

The method involves the following procedure, as illustrated in the flowchart of Figure 4. First (as represented at 40), all Raman pump lasers are driven to a nominal drive current. Second (41), the customer, that is the user of the transmission link, sets up the system to provide full loading on all channels and at normal channel operating powers. Third (42), a detector at the receive end of the span monitors the received signals in order to generate an output representing the resulting Raman amplified channel power Pout(X). The detector could be an integrated optical spectrum analyser.

Fourth (43), each pump is individually modulated, in turn, at a given frequency and modulation depth. This is effectively a "dither" signal that serves to identify the signal and channel involved at the time. Fifth (44), the effect of the modulation/dither on the signal amplitude is detected (decoded) on a per channel basis at the modulation frequency. Sixth (45), the resultant spectral gain profile is recorded. This may be in a temporary store, such as RAM, or on a recordable medium, such as disc, tape or the like.

Seventh (46), the Raman pump lasers are driven to values of current predicted by the spectral gain profiles in order to approach the desired Raman gain shape. Finally, (48), the process may be repeated starting with the new, predicted values of drive current in order to obtain current values leading to a closer match between the predicted and the desired current values.

A specific implementation of this general method or technique will now be detailed in the context of an optical transmission system using three laser pumps. Exemplary values for the initial pump conditions for the system may be:

pump No 1 = 1427nm wavelength at 380mW;
pump No 2 = 1455nm wavelength at 170mW; and
pump No 3 = 1485nm wavelength at 185mW.

These values are used in the method for the step of establishing the initial Raman gain shape. This shape is recorded as the benchmark for later comparison.

With all other parameters and operating conditions maintained constant, the power of each laser pump in turn is reduced by a fixed amount, typically by 20mW, and the Raman gain shape determined and recorded as before. This process is repeated for each pump in turn. The difference between the original power profile and the reduced power profile is then calculated for each pump. The result of this calculation indicates the contribution of the individual pump to the overall Raman gain shape as a function of wavelength. These results are then processed according to an algorithm in order to make a prediction as to the most likely values of laser pump power that will produce the desired gain shape.

The algorithm employed to predict this overall Raman gain shape is as follows:

$$\text{Fibre gain}(\lambda) = \text{Original shape}(\lambda) - [(\Delta Pp_{1427nm}/20)*(Pc_{1427nm}(\lambda)] -$$

$$[(\Delta Pp_{1455nm}/20)*(Pc_{1455nm}(\lambda)] - [(\Delta Pp_{1485nm}/20)*(Pc_{1485nm}(\lambda)]$$

Where:

$\Delta Pp_{14xxnm}$ is the difference in pump power at 14XXnm between the power required for the original gain shape and the new pump power, and

$Pc_{14xxnm}$ is the contribution from the 14XXnm pump as measured by reducing the pump power by 20mW from the original power.

The same algorithm is used in successive iterations according to the final step mentioned above. Of course, if the results of the first run of the algorithm are acceptable there is no necessity for any further iteration(s). The better the initial choice of drive current values (and hence power settings) for the laser pumps, the closer the prediction of the algorithm to the final figures. This is equivalent to recognising that a more intelligent first estimation is similar to beginning an iteration with a set of values derived from the previous run.

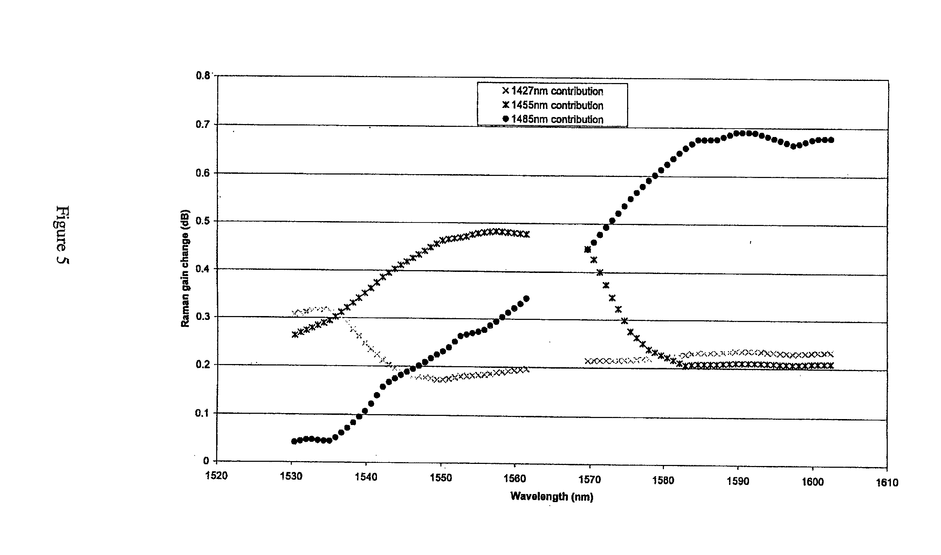

Figures 5 to 7 illustrate this point. In Figure 5, the individual plots represent the change in contribution made to the overall gain by each of the three laser pumps (which in the present instance operate at the wavelengths of 1427nm, 1455nm and 1485nm) when the power of each laser is reduced in turn by 20mW. The left side of the Figure represents the C-band and the right side represents the L-band. The curves therefore represent the values of $Pc_{14xxnm}$ ($\lambda$) used in the algorithm.

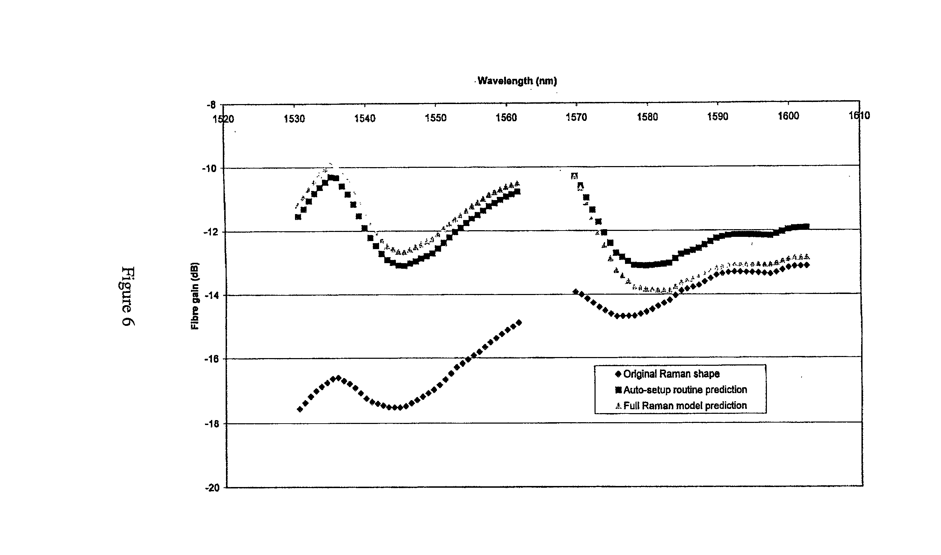

Figure 6 shows a set of three curves in each of the L- and C-bands. The curve (A) depicted by diamonds represents the original Raman gain shape measured as in the third step indicated previously. The curve (B) depicted by the squares is the first estimate of Raman gain shape. The curve (C), represented by triangles, is the result of a simulation using a verified Raman model. This is used to indicate what would happen in reality should the Raman pump power predicted by the auto-setup routine be implemented.

At this point, it could be decided that the results of this iteration are adequate and no further iteration need be carried out. However, if it is necessary or desirable to do so, the routine can be run again. This time, the starting values are those predicted by the first iteration, with the power levels again reduced by 20mw, rather than being an intelligent guess" based on operator experience and first principles. The gain contributions from each pump are again calculated, as before, and a second prediction made.

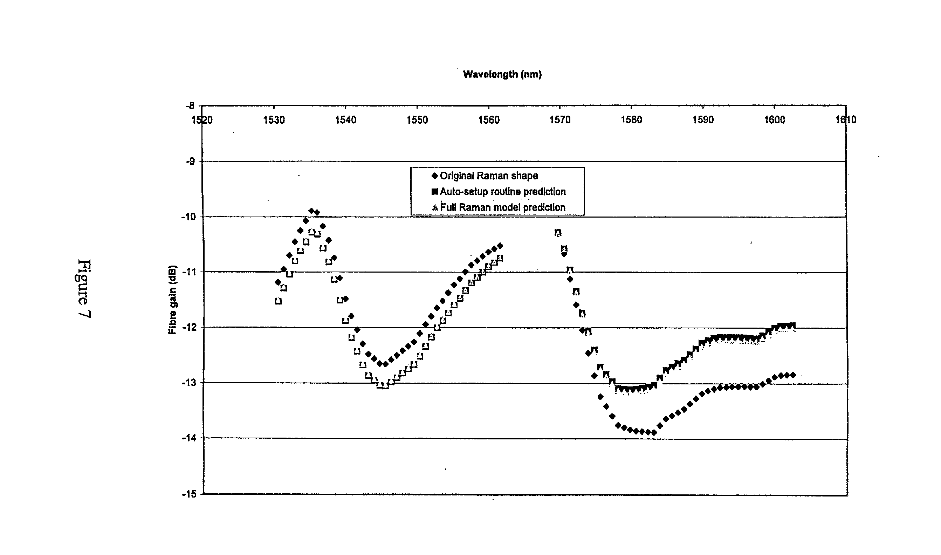

The results of the second iteration are illustrated in Figure 7. The significance of the respective curves in this Figure is the same as for Figure 6. It is immediately clear that the final shape is closely matched to that resulting from the predicted values. It is unlikely that any further iteration(s) would be carried out under these circumstances. It is not necessary for the power reduction to be 20mW for each iteration. Greater or smaller incremental changes could be chosen (eg 10mW or 30mW) and it is not necessary for the same increment to be used in successive iterations. Indeed, it may be more accurate if the incremental change reduces in size as the number of iterations progresses.

Moreover, although the auto-setup routine has been described as being fully automatic, in the sense that the results of the calculation performed via the algorithm are fed back into the algorithm for another iteration to be performed and/or for the powers of the laser pumps to be adjusted to the predicted values automatically, it is possible, in a variation of the invention, that the predicted values could merely be displayed so that an operator would implement the predicted values.

This variation could be useful for training purposes, for example. The routine still automatically compensates for the influence of each laser pump power on the other(s) and the influence of the signal(s) on the other(s). In any case, the routine still requires no advance knowledge of the span parameters and/or operating conditions and therefore still achieves the objectives of the invention.

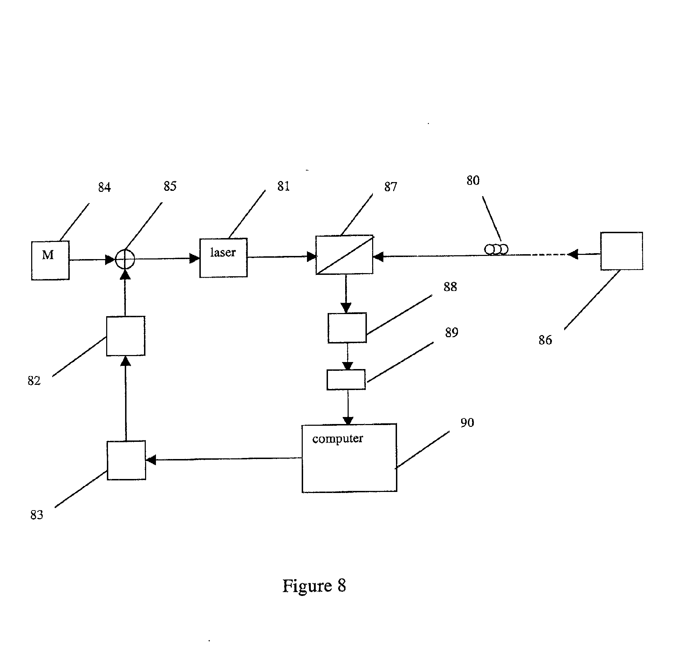

Finally, referring to the block diagram in Figure 8, the optical fibre 80 is supplied with optical energy by counter-pumping at the receive end of a transmission path by means of a pump laser 81 to cause the fibre to exhibit Raman gain and thereby cause it to act as a distributed amplifier, as is well known. The optical pumping power from the laser is coupled into the fibre 80 by a coupler 87. Power for the laser 81 is normally supplied by a power source 82 whose current is controlled by a current controller 83 so as to regulate the power fed into the fibre 80 and thus the power of the optical signals transmitted via the fibre. This standard set-up is augmented by a source 84 of modulation signals that are combined with the power signals to the laser by means of an adder 85. In this way, the laser 81 is supplied with controllable drive current and a modulation signal. The laser therefore pumps the fibre 80 and applies gain to signals fed into the fibre from a signal source 86 at the transmit end of the transmission path.

The coupler 87 picks off signals from the fibre 80, after transmission through it, and supplies them to a per-channel detector 88 (and decoder, not shown, if necessary) on the basis of the sensed frequency and modulation depth. This ensures that the contribution from the correct Raman pump is being considered, bearing in mind that the set-up shown in Figure 8 is repeated for each of the laser pumps in the system. The detected signals are demodulated 89 in order to determine the extent to which the modulated pump contributes Raman gain to all the signal channels.

Reference 90 indicates a computer, containing a processor, and a storage medium, such as a chip, RAM, disk, tape or the like, which stores the gain profile determined for that particular laser pump. The computer 90 also implements the algorithm already described previously. To that end, it contains means for storing the algorithm in a form that can be accessed readily. The algorithm may therefore be stored in a chip, RAM, disk, tape or the like contained within the computer or readily accessible by the computer.

The result of the calculation performed by the computer is used to control the drive current supplied to the laser pump by the pump power source 82, thereby automatically controlling the power setting for the laser pumps in turn until the required result is obtained. As previously mentioned, the computer output may alternatively be arranged to supply an indicator or other form of display device, enabling an operator to implement the desired changes to the pump settings.

In summary, the invention is directed to a method for automatic set up of Raman gain within an optical transmission fibre adapted to carry a number of optical transmission channels and having at least one optical pump operable to cause the fibre to exhibit Raman amplification. The method involves modulating the power of the optical pump or pumps, detecting the effect of the modulation on the gain of each transmission channel and then adjusting the power of the pump or pumps in dependence on the effect detected. The invention is also directed to apparatus for performing this method.

**Claims**

1. A method for automatic set up of Raman gain within an optical transmission fibre adapted to carry a plurality of optical transmission channels and having at least one optical pump operable to cause the fibre to exhibit Raman amplification, the method comprising:

   modulating the power of said optical pump(s);
   detecting the effect of said modulation on the gain of each said transmission channel; and
   adjusting the power of the pump(s) in dependence on the effect detected in step (b).

2. The method of Claim 1, wherein said modulating step (a) is carried out by applying a dither signal to said optical pump(s).

3. The method of Claim 1 or Claim 2, further comprising:

   (d) storing data relating to the power of said transmission channels under full load conditions prior to said modulating step (a);
   (e) storing data relating to the power of said transmission channels during said detecting step (b);
   (f) comparing stored data derived from step (d) with stored data derived from step (e) to obtain a difference signal; and
   (g) adjusting the power of said optical pumps in dependence on said difference signal.

4. The method of any of Claims 1 to 3, wherein said optical pump comprises a plurality of optical pump sources and said method is applied to each of said sources in turn.

5. The method of Claim 4, wherein said difference signal comprises the data [Original shape($\lambda$)] obtained under full load conditions in step (d) reduced by a factor relating to the contribution made by each said source in turn, according to the algorithm:

$$\text{Fibre gain}(\lambda) = [\text{Original shape}(\lambda)]\text{-}[(\Delta Pp_{xnm}/N)^*(Pc_{xnm}(\lambda)]_R$$

   where:

   Fibre gain($\lambda$) is the predicted value for the gain of the fibre as a function of wavelength $\lambda$;
   $\Delta Pp_{xnm}$ is the difference in pump power at a wavelength of Xnm between the power required for the original gain shape and the new pump power;

$Pc_{xnm}$ is the contribution from the pump source of wavelength Xnm as measured by reducing the pump power by NmW from the original power, and

R represents the number of individual pump sources whose contributions are deducted from [Original shape $(\lambda)$].

6. The method of any of Claims 3 to 5, wherein said steps (a) to (g) are performed iteratively over all transmission channels.

7. A method for determining the gain profile of a Raman optical transmission fibre having a plurality of optical pumps and adapted to carry a plurality of optical transmission channels, the method comprising:

(a) storing data relating to the power of each of said transmission channels in turn under full load conditions;
(b) modulating the power of said optical pumps in turn;
(c) detecting the effect of said modulation on the gain of each of said transmission channels;
(d) storing data relating to the gain of said transmission channel(s)during said detecting step (c);
(e) comparing stored data derived from step (a) with stored data derived from step (e) to obtain a difference signal; and
(f) adjusting the power of said optical pumps in dependence on said difference signal.

8. Apparatus for automatically controlling the gain of each of a plurality of optical transmission channels in an optical transmission fibre operable so as to exhibit Raman amplification, the apparatus comprising;

(a) at least one pump (81) for applying optical power to the fibre to cause it to operate as a Raman amplifier;
(b) a modulator (84) to modulate said optical power;
(c) a detector (88) for detecting the depth of modulation of a signal transmitted over the channel subjected to the modulated pump;
(d) a comparator to determine the variation in modulation depth of the signal subjected to said modulation compared to the signal prior to modulation; and
(e) control means for adjusting the power of the pump in dependence on the output of the comparator, whereby to obtain an indication of the gain profile of each of said transmission channels.

9. Apparatus as claimed in Claim 8, further comprising:

(f) a plurality of said pumps;
(g) means for modulating in turn each said channel when pumped by a respective said pump;
(h) means for storing data derived from said detector and relating to the gain profile of each said channel; and
wherein said control means adjusts the power of each said pump according to the following algorithm:

$$\text{Fibre gain}(\lambda) = [\text{Original shape}(\lambda)]-[(\Delta Pp_{xnm}/N)*(Pc_{xnm}(\lambda)]_R$$

where:

Fibre gain$(\lambda)$ is a predicted value for the gain of the fibre as a function of wavelength $\lambda$;
$\Delta Pp_{xnm}$ is the difference in pump power at a wavelength of Xnm between the power required for the original gain shape and the new pump power;
$Pc_{xnm}$ is the contribution from the pump source of wavelength Xnm as measured by reducing the pump power by NmW from the original power, and
R represents the number of individual pump sources whose contributions are deducted from [Original shape $(\lambda)$].

10. Apparatus as claimed in Claim 9 comprising a computer (90) programmed to perform the said algorithm.

11. Apparatus as claimed in Claim 10 further comprising storage means carrying a program to perform said algorithm.

12. A computer program on a machine readable format to carry out the method of Claim 1 or 7.

13. A computer programmed to perform the method of Claim 1 or Claim 7.

**14.** An optical signal amplified by an optical transmission fibre exhibiting Raman gain and forming part of the apparatus as claimed in any of Claims 8 to 11.

**15.** An optical signal amplified by an optical pump operable on an optical transmission fibre to cause Raman gain by the method claimed in Claim 1 or Claim 7.

**16.** An optical system comprising an apparatus for automatically controlling the gain of each of a plurality of optical transmission channels in an optical transmission fibre operable so as to exhibit Raman amplification, the apparatus comprising;

(a) at least one pump (81) for applying optical power to the fibre to cause it to operate as a Raman amplifier;
(b) a modulator (84) to modulate said optical power;
(c) a detector (88) for detecting the depth of modulation of a signal transmitted over the channel subjected to the modulated pump;
(d) a comparator to determine the variation in modulation depth of the signal subjected to said modulation compared to the signal prior to modulation; and
(e) control means for adjusting the power of the pump in dependence on the output of the comparator, whereby to obtain an indication of the gain profile of each of said transmission channels.

Pin(λ)

Pout(λ)

2

1

3

Figure 1

5

Tx

Rx

2

1

3

4

6

Figure 2

Figure 3

**40** → Drive Raman pump lasers to nominal drive current

**41** → System set up with full channel loading at operating powers

**42** → Monitor resulting Raman amplified channel powers

**43** → Modulate pump power individually at given frequency and modulation depth

**44** → Decode effect on signal amplitude per channel at modulation frequency

**45** → Record resulting spectral gain profile

**46** → Record effect on channel gains for each laser pump in turn

**47** → Drive laser pumps as predicted for desired Raman gain shape

**48** → Repeat as necessary

Figure 4

Figure 5

Figure 6

Figure 7

Figure 8